# EUROPÄISCHE PATENTSCHRIFT

(11) **EP 3 365 568 B1**
(45) Veröffentlichungstag und Bekanntmachung des Hinweises auf die Patenterteilung: **27.03.2019**
(21) Anmeldenummer: 17758434.9
(22) Anmeldetag: 31.08.2017
(51) Int. Cl.: F16C 1/02, F16C 1/06, D07B 1/14, D07B 5/00

(54) **BIEGSAME WELLE MIT GERÄUSCHREDUZIERENDER UMWICKLUNG UND VERFAHREN ZUR HERSTELLUNG EINER BIEGSAMEN WELLE MIT GERÄUSCHREDUZIERENDER UMWICKLUNG**
FLEXIBLE SHAFT WITH NOISE-REDUCING WRAPPING AND METHOD FOR THE PRODUCTION OF A FLEXIBLE SHAFT WITH NOISE-REDUCING WRAPPING
ARBRE SOUPLE COMPRENANT UN HABILLAGE RÉDUISANT LE BRUIT ET PROCÉDÉ DE PRODUCTION D'UN ARBRE SOUPLE COMPRENANT UN HABILLAGE RÉDUISANT LE BRUIT

(30) Priorität: 11.01.2017 EP 17000044
(43) Veröffentlichungstag der Anmeldung: 29.08.2018
(73) Patentinhaber: Gemo G. Moritz GmbH & Co. KG, 47800 Krefeld (DE)
(72) Erfinder: ESTENFELDER, Ralf, 47918 Tönisvorst (DE)
(74) Vertreter: Hausfeld, Norbert
(86) Internationale Anmeldenummer: PCT/EP2017/001032
(87) Internationale Veröffentlichungsnummer: WO 2018/130259

(56) Entgegenhaltungen:
- EP-A1- 1 286 065
- DE-A1-102007 041 233
- DE-U1- 29 723 288
- JP-A- H06 294 460

## Beschreibung

Die Erfindung betrifft biegsame Wellen mit geräuschreduzierenden Umwicklungsmitteln, die um die Welle gewickelt sind, nach dem Oberbegriff des Anspruchs 1. Weiterhin betrifft die Erfindung eine Kraftübertragungsanordnung nach dem Oberbegriff von Anspruch 7. Die Erfindung betrifft weiterhin eine einstellbare Fahrzeugkomponente nach dem Oberbegriff von Anspruch 8 und schließlich betrifft die Erfindung ein Verfahren zur Herstellung einer flexiblen Welle mit geräuschreduzierenden Umwicklungsmitteln, die um die Welle gewickelt werden, nach dem Oberbegriff des Anspruchs 9.

Gattungsgemäße biegsame Wellen, die auch als flexible Wellen bezeichnet werden, dienen der Kraftübertragung zwischen einer Kraftquelle, zum Beispiel einem Motor, insbesondere einen Elektromotor, und einem davon entfernt gelegenen Ort, an dem zum Beispiel die Kraft zur Bewegung von Bauteilen benötigt wird. Solche biegsamen Wellen bestehen in der Regel aus mehreren Lagen aus Drahtwicklungen, wobei benachbarte Lagen in der Regel unterschiedliche Windungsrichtungen haben. Typische Anwendungsgebiete dieser biegsamen Wellen sind im Kraftfahrzeugbau. Die hier gemeinten biegsamen Wellen werden zum Beispiel für den Antrieb von Schiebedächern, von Seitenfenstern, von Fahrzeugsitzen, als Tachometerwellen etc. verwendet. Dabei müssen diese biegsamen Wellen teilweise mit hoher Drehzahl drehen, zum Beispiel innerhalb eines umgebenden Schutzgehäuses oder innerhalb eines äußeren Schlauches. Gerade bei hohen Drehzahlen produzieren die biegsamen Wellen erhebliche Geräusche, die zum Beispiel für Fahrzeuginsassen sehr störend sind. Zur Reduktion der Geräuschentwicklung sind diese biegsamen Wellen daher zum Beispiel mit einem Flockgarn umwickelt. Solche Flockgarne werden auch als Flockgarnfäden bezeichnet. Es sind auch alternative geräuschreduzierende Umwicklungsmittel im Stand der Technik bekannt, die um die flexible Welle gewickelt werden, z.B. elastische Schläuche. Eine generelle Eigenschaft dieser geräuschreduzierenden Umwicklungsmittel ist, dass sie radial nach außen über die Wicklungsdrähte der biegsamen Welle hervorzustehen. Die Durchmesser der geräuschreduzierenden Umwicklungsmittel werden also z.B. so gewählt, dass sie sich weiter radial nach außen erstrecken als die Drähte der äußeren Wickellage oder als z.B. die Windungen einer radial außen liegenden Steigungswendel für den Fall, dass es sich bei der biegsamen Welle um ein sogenanntes Steigungskabel handelt. Die biegsame Welle ohne geräuschreduzierende Umwicklungsmittel, also z.B. ohne Flockgarnumwicklung, kann als Rohwelle bezeichnet werden.

Eine solche gattungsgemäße biegsame Welle offenbart zum Beispiel die EP 1 286 065 B1. Es ist in der dortigen Figur 1 zunächst der typische Grundaufbau einer biegsamen Welle gezeigt. Um einen Kemdraht herum wird zunächst eine erste, aus mehreren Drähten bestehende Lage gewickelt. Diese Wicklung erfolgt zum Beispiel in einer ersten Richtung. Über diese erste Drahtlage wird zum Beispiel eine zweite Drahtlage gewickelt, die ebenfalls aus mehreren Drähten besteht, und die zum Beispiel in einer von der ersten Wicklungsrichtung abweichenden Wicklungsrichtung gewickelt wird. Es können weitere Drahtlagen um diese beiden beschriebenen Lagen gewickelt werden. Figur 1 der EP 1 286 065 B1 offenbart in ihrer Figur 1 insgesamt fünf Lagen, die in ihrer Richtung alternierend gewickelt sind. Gattungsgemäße biegsame Wellen weisen mehrerer solcher Drahtlagen auf und mindestens zwei dieser mehreren Drahtlagen sind in unterschiedlicher Richtung zueinander gewickelt. Dies muss nicht in der in Figur 1 der EP 1 286 065 B1 gezeigten Weise von Lage zu Lage alternierend erfolgen.

Die EP 1 286 065 B1 offenbart weiterhin, dass aus der äußeren gewickelten Drahtlage ein Draht entfernt wird. In die entstehende Lücke wird dann ein Flockgarnfaden eingewickelt, der die gewünschte geräuschreduzierende Wirkung entfalten soll. In der dortigen Figur 4 ist zum Beispiel zu erkennen, dass die entstehende biegsame Welle mit Flockgarnumwicklung in einem äußeren Schlauch aufgenommen ist, in dem die Welle drehen kann. Die dabei entstehenden Geräusche werden durch den Flockgarn reduziert.

Die EP 1 286 065 B1 offenbart ein zweites alternatives Herstellungsverfahren. In diesem alternativen Herstellungsverfahren wird nicht erst eine vollständige äußere Drahtlage gewickelt und dann ein Draht aus der äußeren Drahtlage entfernt, sondern bei der Wicklung der äußeren Drahtlage wird bereits ein Draht weggelassen und durch einen Flockgarnfaden ersetzt. Damit dieser Flockgarn seine geräuschmindernde Wirkung entfalten kann, muss er die äußere Drahtlage radial überragen, sodass zunächst der Flockgarn den umgebenden Schlauch berührt, bevor die äußeren Drähte der äußeren Drahtlage den Schlauch berühren können.

Die EP 1 286 065 B1 zeigt auch typische Anwendungsbeispiele für die gattungsgemäßen biegsamen Wellen. Es kann dazu auf die dortigen Figuren 5, 6, 7 und 8 verwiesen werden und auf die zugehörige Beschreibung. Für diese Anwendungsgebiete eignen sich in besonderer Weise auch die in dieser Anmeldung beschriebenen erfindungsgemäßen biegsamen Wellen.

Es sind im Stand der Technik auch biegsame Wellen mit Flockgarnumwicklung oder anderen geräuschreduzierenden Umwicklungsmitteln bekannt, die ohne einen Kerndraht auskommen. Auch solche biegsamen Wellen ohne Kerndraht sind Gegenstand der vorliegenden Erfindung.

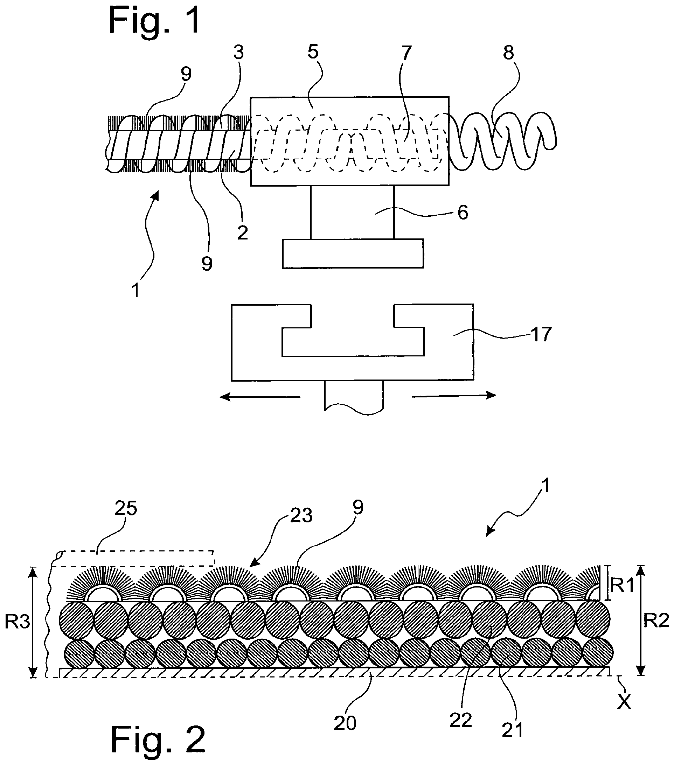

Zur Reduzierung der Geräuschentwicklung sind im Stand der Technik auch Alternativen zu Flockgarnumwicklungen bekannt. So offenbart zum Beispiel die DE 100 14 329 A1 eine biegsame Welle, die dort als geräuscharmes Antriebskabel bezeichnet wird. Auch dort ist zum Beispiel in der Figur 1 der typische Grundaufbau einer biegsamen Welle gezeigt, die nämlich einen Kerndraht aufweist und um diesen Kerndraht gewickelte Drahtschichten mit unterschiedlichen Wicklungsrichtungen. In der äußersten Schicht des dort gezeigten Antriebskabels ist eine Steigungswendel um die biegsame Welle herum spiralförmig gewickelt, sodass insgesamt ein Steigungskabel entsteht. Zwischen den Windungen dieser Steigungswendel wird dann zum Zwecke der Geräuschreduzierung ein elastischer Schlauch gewickelt, der die Steigungswendel in radialer Richtung überragt und in seiner Funktion und in seiner Wirkung einem Flockgarn entspricht. Figur 2 dieser Schrift offenbart ein weiteres Anwendungsbeispiel für die erfindungsgemäßen biegsamen Wellen, insbesondere für solche mit einer außenliegenden Steigungswendel. Diese Steigungswendel kann zum Beispiel zum Antrieb eines Zahnrades verwendet werden.

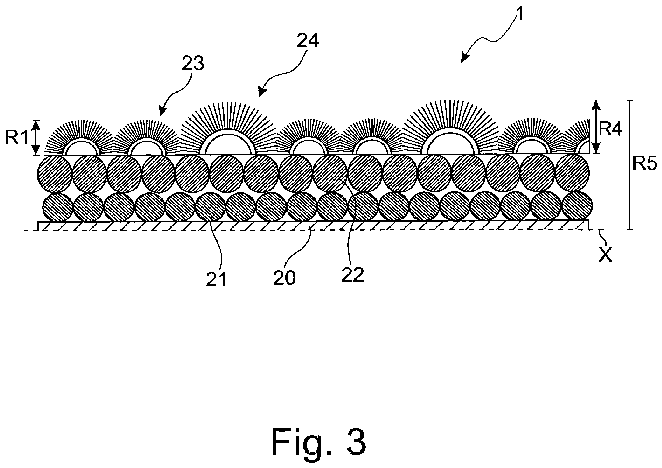

Auch die DE 10 2007 041 233 A1 zeigt eine gattungsgemäße biegsame Welle, die dort als Steigungskabel mit Flockfaden bezeichnet wird. Auch hier ist aus den Figuren 2 und 3 ersichtlich, dass in der äußeren Lage der biegsamen Welle ein Flockgarnfaden zwischen den Windungen einer Steigungswendel eingewickelt ist. Der Flockgarnfaden überragt die Windungen der Steigungswendel in radialer Richtung.

Die Flockgarnfäden sind im Stand der Technik z.B. mittels Kleber oder z.B. durch Anschmelzen zusätzlich auf der biegsamen Welle fixiert. In analoger Weise kann dies bei alternativen geräuschmindernden Umwicklungsmitteln erfolgen. Es wird dadurch ein Ablösen verhindert. Teilweise werden die Flockgarnfäden auch in die Zwischenräume der äußeren Drahtlage hineingepresst und dadurch fixiert. Für die erfindungsgemäßen biegsamen Wellen kann eine solche Fixierung auch realisiert werden, falls dies gewünscht ist.

Einen gattungsfremden Stand der Technik zeigt die EP 1 491 779 A1. Zwar zeigt die Figur 1 den typischen Grundaufbau einer biegsamen Welle. Allerdings wird hier die biegsame Welle nicht mit einem geräuschmindernden Umwicklungsmittel umwickelt, sondern ein geräuschminderndes Mittel wird im die biegsame Welle umgebenden Schlauch ausgebildet, siehe die dortige Figur 2 mit dazugehörender Beschreibung, nämlich auf der Innenseite des äußeren Schlauches. Figur 3 dieser EP 1 491 779 A1 zeigt ein weiteres Anwendungsbeispiel erfindungsgemäßer biegsamer Wellen.

Die DE 20 2014 100 220 U1 zeigt einen gattungsgemäßen Stand der Technik zum Beispiel in Figur 2. Zwischen den radial außenliegenden Windungen einer Steigungswendel eines Antriebskabels, in der vorliegenden Anmeldung allgemein als biegsame Welle und speziell als Steigungskabel bezeichnet, ist ein Flockgarnfaden angeordnet, der die Windungen in radialer Richtung überragt. Figur 1 der DE 20 2014 102 20 U1 zeigt ein weiteres Anwendungsbeispiel für erfindungsgemäße biegsame Wellen. Die EP 2 781 771 A1 zeigt eine weitere biegsame Welle, bei der die geräuschmindernden Umwicklungsmittel als Flockgarnfaden ausgebildet sind. Es sind dort auch Polymerfaden als geräuschmindernde Mittel angegeben, die aber in dieser Anmeldung mit unter den Begriff "Flockgarnfaden" gefasst werden Weiteren Stand der Technik zeigen die JP H06294460 und DE 297 23 288 U1.

Schließlich entspricht auch die US 2013/0000470 A1 dem gattungsbildenden Stand der Technik. Auch hier wird in der äußeren Lage der biegsamen Welle ein Flockgarnfaden eingewickelt.

Es ist im Stand der Technik auch bekannt, biegsame Wellen auf andere Art als durch Umwicklung mit einem geräuschreduzierenden Mittel geräuschärmer auszubilden, z.B. indem Flockfilamente oder anderer Geräuschdämmer darauf abgeschieden werden. Das Umwickeln wird aber als technisch vorteilhaft angesehen.

Der vorstehend genannte Stand der Technik führt zu einer gewünschten Reduktion der entstehenden Geräusche, wenn zum Beispiel eine gattungsgemäße biegsame Welle in einem äußeren Schlauch rotierend umläuft. Es wird dazu in der Dimensionierung von dem äußeren Schlauch und von der darin angeordneten biegsamen Welle darauf geachtet, dass der Innendurchmesser des Schlauches geringer ist als der Außendurchmesser der biegsamen Welle, wobei sich der Flockgarnfaden der biegsamen Welle am weitesten radial nach außen erstreckt, sodass eine Berührung zwischen Schlauch und biegsamer Welle im Wesentlichen mit dem in der äußeren Lage gewickelten Flockgarnfaden stattfindet. Der Schlauch steht an dieser Stelle und in der gesamten Beschreibung exemplarisch auch für andere die biegsame Welle umgebende Elemente, in denen die biegsame Welle rotierbar aufgenommen ist. Ohne Beschränkung der Allgemeinheit kann zum Beispiel der Innendurchmesser eines solchen äußeren Schlauches bei 5,2 mm liegen, während der Außendurchmesser der biegsamen Welle zum Beispiel bei 5,4 mm liegen kann. Das Übermaß der biegsamen Welle liegt also typischerweise in der Größenordnung von 5%, also insbesondere zwischen 1% und 10% gerechnet vom Innendurchmesser des Schlauches. Bei Verwendung alternativer geräuschmindernder Umwicklungsmittel wäre dieses Mittel analog wie oben am Beispiel des Flockgarns erläutert im Durchmesser zu dimensionieren. Je nach Anwendungsfall sind der Innendurchmesser des Schlauches und der Außendurchmesser der biegsamen Welle abweichend von den genannten Werten gewählt, wobei die Größenordnung des Übermaßes in der Regel erhalten bleibt.

Problematisch an diesem gattungsgemäßen Stand der Technik ist, dass sowohl bei der Herstellung der biegsamen Welle als auch bei der Herstellung des die biegsame Welle umgebenden Schlauches Fertigungstoleranzen unvermeidbar sind. Darunter ist zu verstehen, dass der Außendurchmesser der biegsamen Welle in einem bestimmten Wertebereich um einen Mittelwert liegen wird und der Innendurchmesser des umgebenden Schlauches wird ebenfalls in einem gewissen Wertebereich um einen Mittelwert liegen. Die im vorstehenden Absatz genannten Beispiele für Durchmesser entsprechen z.B. solchen Mittelwerten. Aufgrund dieser genannten Fertigungstoleranzen können zwei Extreme auftreten, die zu einer unterschiedlichen Problematik führen. Wenn zum Beispiel eine biegsame Welle mit fertigungsbedingt großem Durchmesser vorliegt und in einem Schlauch mit fertigungsbedingt geringem Innendurchmesser verwendet wird, entsteht ein hohes Reibmoment zwischen der Welle und dem Schlauch und es treten beim drehendem Antrieb der biegsamen Welle hohe Reibungsverluste auf. Im anderen Extrem, nämlich bei Vorliegen einer fertigungsbedingt mit einem geringen Außendurchmesser hergestellten biegsamen Welle und bei Führung dieser dünnen Welle in einem Schlauch mit herstellungsbedingt großem Innendurchmesser, entsteht ein relativ großes Spiel zwischen der Welle und dem Schlauch und die gewünschte Geräuschreduzierung tritt nicht im gewünschten Maße auf, d.h. die Geräuschreduzierung ist unbefriedigend und es treten störende Geräusche auf.

Die bisher im Stand der Technik vorhandenen biegsamen Wellen können diesem Problem noch nicht wirkungsvoll begegnen. Die Aufgabe der vorliegenden Erfindung besteht also darin eine biegsame Welle aufzuzeigen, die die vorstehend beschriebenen Nachteile beseitigt. Weitere Aufgaben bestehen darin, die in typischen Anwendungsgebieten die durch die geschilderten Nachteile auftretenden Probleme zu lösen.

Diese Aufgabe wird gelöst durch eine biegsame Welle nach Anspruch 1 sowie durch ein Verfahren zur Herstellung einer biegsamen Welle nach Anspruch 9. Anwendungen solcher biegsamen Wellen sowie weitere vorteilhafte Ausgestaltungen sind in den weiteren Ansprüchen und in den Unteransprüchen angegeben.

Die erfindungsgemäße biegsame Welle ist dadurch ausgezeichnet, dass radial außen liegend ein zweites geräuschminderndes Umwicklungsmittel mit einem zweiten radialen Außenabstand zur Längsachse der biegsamen Welle angeordnet ist, wobei der zweite radiale Außenabstand größer als der erste radiale Außenabstand ist. In einer ersten Ausführungsform der Erfindung kann dies z.B. dadurch realisiert sein, dass radial außen liegend zusätzlich zu dem aus dem Stand der Technik bekannten ersten geräuschreduzierenden Umwicklungsmittel ein zweites geräuschminderndes Umwicklungsmittel mit einem zweiten Durchmesser angeordnet ist, wobei der zweite Durchmesser größer als der erste Durchmesser ist. In einer weiteren Ausführungsform kann die Erfindung auch dadurch realisiert werden, dass unterhalb des zweiten Umwicklungsmittels z.B. ein Flachband gewickelt wird, das zu einer Erhöhung des radialen Außenabstandes des darauf gewickelten zweiten Umwicklungsmittels führt, das aber selbst keinen größeren Radius als das erste Umwicklungsmittel haben muss. Figur 2 der EP 2 781 771 A1 zeigt ein solches Flachband mit Bezugszeichen 21. Eine weitere anspruchsgemäße Ausführungsvariante besteht z.B. darin, dass zunächst eine geschlossenen Flockgarndecke gewickelt wird, z.B. mit einem ersten Flockgarnfaden, auf die dann ein zweiter Flockgarnfaden gewickelt wird in der Art einer Steigungswendel, das heißt mit einem Abstand zwischen den Flockgarnwindungen. Erster und zweiter Flockgarnfaden können bei dieser Variante auch identisch sein, und die Flockgarnfäden können auch durch einen elastischen Schlauch oder andere aus dem Stand der Technik bekannte Umwicklungsmittel ersetzt sein. Die zweiten Umwicklungsmittel überragen also bei jeder dieses mehreren Ausführungsformen, die auch miteinander kombiniert realisierbar sind, in radialer Richtung die ersten Umwicklungsmittel. Der Vorteil dabei ist, dass hierdurch ein größeres Toleranzspiel zwischen den beiden Komponenten biegsame Welle und umgebender Schlauch (oder anderes umgebendes Bauelement) ausgeglichen werden kann, ohne dass sich bei einem engen Spiel die Reibungskräfte stark erhöhen bzw. bei einem weiten Spiel die biegsame Welle zu wenig Abstützung im Schlauch erhält (Geräusche).

Es versteht sich, dass die anspruchsgemäße Erfindung auch die Möglichkeit umfasst, dass mehr als 2 Flockgarnfäden mit unterschiedlichen radialen Außenabständen zur Längsachse der biegsamen Welle angeordnet sind. Es versteht sich auch, dass die anspruchsgemäße Erfindung auch die Möglichkeit umfasst, dass mehrere erste und zweite Umwicklungsmittel vorgesehen sind. Die Zahl der ersten und die Zahl der zweiten Umwicklungsmittel kann gleich oder unterschiedlich gewählt werden. Die Zahl der ersten und die Zahl der zweiten Umwicklungsmittel und Kombinationen dieser beiden Zahlen sind nicht erfindungsbeschränkend. Es ist im Rahmen der anspruchsgemäßen Erfindung auch möglich, unterschiedliche Ausführungsvarianten eines Umwicklungsmittel als erstes und als zweites Umwicklungsmittel einzusetzen, also z:B. einen Flockgarnfaden als erstes und einen elastischen Schlauch als zweites Umwicklungsmittel, oder umgekehrt. Natürlich können auch beide Umwicklungsmittel als Flockgarnfaden oder als elastischer Schlauch ausgebildet sein. Für alternative Umwicklungsmittel gilt dies analog.

Mit Vorteil kann dieses erfinderische Konzept auf biegsame Wellen mit einer radial außen liegenden und spiralförmig umlaufenden Steigungswendel angewendet werden, also bei einem Steigungskabel, wobei das geräuschmindernde erste Umwicklungsmittel und das geräuschmindernde zweite Umwicklungsmittel zwischen den Windungen der Steigungswendel des Steigungskabels ausgebildet sind.

Grundsätzlich könnten die geräuschmindernden Umwicklungsmittel in beliebiger, im Stand der Technik bekannter Weise ausgeführt sein. Mit Vorteil sind das erste und das zweite geräuschmindernde Umwicklungsmittel aber als Flockgarnfaden ausgebildet ist. Es ergeben sich Vorteile in der Herstellung z.B. gegenüber elastischen Schläuchen oder gegenüber einer Kombination aus elastischen Schläuchen und Flockgarnfäden als erstem bzw. zweitem Umwicklungsmittel.

Weiterhin wird mit Vorteil vorgeschlagen, dass die biegsame Welle mit mehreren ersten geräuschmindernden Umwicklungsmitteln umwickelt ist, wobei die Zahl der ersten geräuschmindernden Umwicklungsmittel insbesondere größer ist als die Zahl der zweiten geräuschmindernden Umwicklungsmittel. Der Vorteil hierbei besteht darin, dass eine Reibungsreduzierung um bis zu 25 % erreichbar ist.

Vorteilhaft ist vorgesehen, dass der Durchmesser des zweiten geräuschmindernden Umwicklungsmittels um wenigstens 10 % größer ist als der Durchmesser des ersten geräuschmindernden Umwicklungsmittels, bevorzugt mindestens 20%, weiter bevorzugt mindestens 25 %. Die Wahl der konkreten Durchmesser ist dem Fachmann überlassen und hängt regelmäßig vom System ab, in dem die biegsame Welle eingesetzt werden soll. Weitere Kriterien bei der konkreten Wahl können der Schlauchdurchmesser, die Materialpaarung und die Vormaterialqualität sein.

Die Vorteile der erfindungsgemäßen Kraftübertragungsanordnung und der erfindungsgemäßen einstellbaren Fahrzeugkomponente ergeben sich aus den vorstehend erläuterten Vorteilen der biegsamen Welle.

Ein bevorzugtes Verfahren für die Herstellung einer erfindungsgemäßen biegsamen, mehrlagig aus gewickelten Drahtlagen ausgebildeten Welle mit einer geräuschmindernden Umwicklung ist dadurch ausgezeichnet, dass zunächst wie im Stand der Technik grundsätzlich bekannt eine biegsame, mehrlagig aus gewickelten Drahtlagen ausgebildeten Rohwelle ohne geräuschmindernde Umwicklung hergestellt wird. Es folgt dann das Umwickeln der Rohwelle mit einem ersten geräuschmindernden Umwicklungsmittel mit einem ersten radialen Außenabstand zur Längsachse der biegsamen Welle, wobei der radiale Außenabstand so gewählt ist, dass das Umwicklungsmittel radial nach außen über die gewickelten Drahtlagen vorsteht, und das Umwickeln der Rohwelle mit einem zweiten geräuschmindernden Umwicklungsmittel mit einem zweiten radialen Außenabstand zur Längsachse der biegsamen Welle, wobei der zweite radiale Außenabstand größer als der erste radiale Außenabstand ist.

Je nach konkreter Realisierung der ersten und der zweiten Umwicklungsmittel kann dieses Verfahren in unterschiedlicher Weise realisiert sein.

Nach einer ersten Ausführungsform der Erfindung kann die erfindungsgemäße biegsame Welle dadurch realisiert sein, dass radial außen liegend zusätzlich zu dem aus dem Stand der Technik bekannten ersten geräuschreduzierenden Umwicklungsmittel ein zweites geräuschminderndes Umwicklungsmittel mit einem zweiten Durchmesser angeordnet ist, wobei der zweite Durchmesser größer als der erste Durchmesser ist. Bei einer solchen Ausführungsvariante wird also die Rohwelle umwickelt mit einem ersten geräuschmindernden Umwicklungsmittel mit einem ersten Durchmesser und dann umwickelt mit einem zweiten geräuschmindernden Umwicklungsmittel mit einem zweiten Durchmesser, der größer als der erste Durchmesser ist. Dabei ist es bevorzugt, das Umwickeln mit dem ersten und mit dem zweiten Umwicklungsmittel in einem einzigen Umwicklungsschritt auszuführen, z.B. indem beide Umwicklungsmittel nebeneinanderliegend gleichzeitig um die Rohwelle gewickelt werden. Dies kann vom Ablauf her z.B. gemäß einer der Varianten in der EP 1 286 065 B1 erfolgen. Die Umwicklungsmittel können z.B. die gesamte Rohwelle nach außen überdecken oder es können unabgedeckte bzw. unumwickelte Bereiche zwischen den Umwicklungsmitteln verbleiben. Insbesondere kann die Umwicklung in die Bereiche zwischen den Windungen einer Steigungswendel erfolgen.

In einer alternativen Ausführungsform einer erfindungsgemäßen biegsamen Welle kann diese auch dadurch realisiert werden, dass unterhalb des zweiten Umwicklungsmittels z.B. ein Flachband gewickelt wird, das zu einer Erhöhung des radialen Außenabstandes des darauf gewickelten zweiten Umwicklungsmittels führt, das aber selbst keinen größeren Radius als das erste Umwicklungsmittel haben muss. Es ist dann beim Herstellungsverfahren ein Umwicklungsschritt für das Umwickeln mit dem Flachband vorzusehen, der z.B. ausgeführt wird, bevor das erste und/oder das zweite Umwicklungsmittel auf die Welle gewickelt wird.

Eine weitere anspruchsgemäße Ausführungsvariante einer biegsamen Welle besteht z.B. darin, dass zunächst eine geschlossenen Flockgarndecke gewickelt wird, z.B. mit einem ersten Flockgarnfaden, auf die dann ein zweiter Flockgarnfaden gewickelt wird in der Art einer Steigungswendel, das heißt mit einem Abstand zwischen den Flockgarnwindungen. Bei dieser Variante wäre also z.B. in einem ersten Herstellungsschritt die Welle vollständig mit einem Flockgarn zu Umwickeln, wobei eine vollständige Umwicklung auch umfasst, dass bestimmte Bereiche der Welle freigelassen werden können, die z.B. anwendungsbedingt von einer Umwicklung freizuhalten sind, z.B. endständige Wellenbereiche, die Kopplungsbereiche darstellen. Diese Bereiche können aber auch nachträglich wieder von der Umwicklung befreit werden, z.B. in einem Bürstschritt. Nach diesem ersten Schritt der vollständigen Umwicklung wäre dann z.B. in einem zweiten Schritt der zweite Flockgarnfaden auf die geschlossene Flockgarndecke zu wickeln.

Auch bei diesen vorstehend beschriebenen Herstellungsverfahren kann der Flockgarnfaden ersetzt sein durch alternative Umwicklungsmittel aus dem Stand der Technik, ohne dass dadurch ein anderes als ein beanspruchtes Herstellungsverfahren realisiert ist.

In Verbindung mit den nachfolgenden Figuren soll die Erfindung detaillierter erläutert werden anhand von Ausführungsbeispielen der Erfindung. Es zeigen:
Fig. 1 eine prinzipienhafte Schnittdarstellung einer als Steigungskabel ausgeführten biegsamen Welle mit daran angeordnetem Kupplungsstück, das mit einem Mitnehmer eines zu bewegenden Bauteiles zusammenwirkt;
Fig. 2 einen Teilausschnitt in Querschnittsansicht zu einer gattungsgemäßen biegsamen Welle, und
Fig. 3 eine Ansicht analog zu Fig. 2 zu einer erfindungsgemäßen biegsamen Welle.

Fig. 1 zeigt den Endbereich eines sogenannten Steigungskabels 1. Dieses Steigungskabel 1 ist in seiner äußeren Lage mit einer Wendel 3 umwickelt. Das Steigungskabel 1 weist radial innenliegend zu der Wendel 3 eine biegsame Rohwelle 2 auf, die in aus dem Stand der Technik bekannter, ansonsten aber beliebiger Weise mehrlagig aus gewickelten Drahtlagen ausgebildet ist. Auf diese biegsame Rohwelle 2 ist die Wendel 3 aus geeignetem, dickerem Draht fest aufgewickelt. Das derart ausgebildete Steigungskabel 1 kann wie eine Zahnstange verwendet werden, ist dabei jedoch von in wesentlichem rundem Querschnitt und biegbar. Dieses Steigungskabel 1 ist eine biegsame Welle im Sinne der vorliegenden Erfindung.

Im gestrichelt dargestellten Endbereich des Steigungskabels 1 ist dieses in einem Kupplungsstück 5 eingebettet, das zum Beispiel als Zinkdruckgusskörper oder in sonstiger Weise ausgebildet sein kann. Seitlich abstehend vom Kupplungskörper 5 ist ein Koppelglied 6 ausgebildet, das zum formschlüssigen seitlichen Eingriff an einem Mitnehmer 17 eines nicht näher dargestellten Schiebedaches bestimmt ist. Bewegung des Kupplungsstücks führt zu einer öffnenden oder schließenden Bewegung des Schiebedaches. Es können auch Autofensterscheiben, Autositze oder dergleichen mehr angetrieben werden, wie dies grundsätzlich im Stand der Technik bekannt ist und wie dies weiter oben in der einleitenden Beschreibung anhand des dort genannten Standes der Technik erläutert wurde.

Wie in Fig. 1 weiter dargestellt, ist das Steigungskabel 1 außerhalb des Kupplungskörpers 5 zwischen den Windungen der Wendel 3 mit einem Flockgarnfaden umwickelt. Dargestellt sind lediglich die Flockgarnfadenhärchen 9. Der Flockgarnfaden ist zum Beispiel durch Einwickeln in die zwischen den Windungen der Wendel 3 freibleibenden Vertiefungen dort angeordnet und fixiert. Die Härchen 9 des Flockgarnfadens dienen der Geräuschdämpfung bei Bewegung des Steigungskabels 1 in ihrer in der Figur nicht dargestellten Führung.

Die Figuren 2 und 3 zeigen jeweils biegsame Wellen, in deren äußerer Lage keine Windungen einer Steigungswelle gezeigt sind. Es handelt sich in diesen Ausführungsvarianten also nicht um Steigungskabel.

Radial innenliegend weist die biegsame Welle 1 der Figuren 2 und 3 zunächst einen Kern 20 auf, z.B. einen Kerndraht, der nur mit seiner oberen Hälfte bis zur Drehsymmetrieachse X gezeigt ist. Um diesen Kern 20 herum ist eine erste Drahtlage mit ersten Drähten 21 gewickelt. Radial weiter außen liegend schließt sich dieser ersten Drahtlage eine zweite Drahtlage aus zweiten Drähten 22 an. Anders als hier dargestellt können nach außen weitere Drahtlagen folgen, wobei dieser Aufbau dem Stand der Technik entspricht und beispielhaft in der EP 1 286 065 B1 erläutert ist.

In der radial äußersten Schicht sind Flockgarnfäden 23 mit Härchen 9 um die äußerste Drahtlage mit Drähten 22 herum gewickelt. Zur Vereinfachung der Darstellung sind diese Flockfäden 23 nur mit ihrer außenliegenden Hälfte dargestellt. Die Härchen 9 des Flockfadens 23 ragen radial nach außen und der Flockgarnfaden 23 weist einen Radius R1 auf. Dieser Radius R1 ist so gewählt, dass die Härchen 9 des Flockgarnfadens 23 insgesamt zu einem Durchmesser (2 mal R2) der biegsamen Welle führen, der größer ist als der Innendurchmesser (2 mal R3) eines äußeren Schlauches 25, der in Fig. 2 gestrichelt angedeutet ist, mit einem zugeordneten Innenradius R3, während zu der biegsamen Welle 1 ein Radius R2 angegeben ist. Aufgrund dieser Dimensionierung berühren die Härchen 9 der Flockgarnfäden 23 die innere Oberfläche des umgebenden Schlauches 25 und sorgen dadurch für eine gewisse Abstützung der biegsamen Welle 1 im umgebenden Schlauch 25.

Ein solcher biegsamer Schlauch 25 oder alternative umgebende Schutzgehäuse können auch zu Figur 1 vorgesehen sein.

In der in Fig. 3 dargestellten biegsamen Welle 1 ist in der äußeren Lage ein erster Flockgarnfaden 23 um die äußerste Drahtlage mit Drähten 23 gewickelt. Zu diesen ersten Flockgarnfäden 23 ist ein zweiter Flockgarnfaden 24 um die äußere Drahtlage herumgewickelt, wobei der Durchmesser dieses zweiten Flockgarnfadens 24 größer ist als der Durchmesser des ersten Flockgarnfadens 23. Bei Anordnung der so entstehenden biegsamen Welle 1 zum Beispiel in einem äußeren Schlauch 25 wie in Figur 2 gezeigt liegen die Härchen des Flockgarnfadens 24 stärker an der Innenseite des äußeren Schlauches 25 an, als die Härchen des Flockgarnfadens 23. Durch die größere radiale Außenerstreckung der Härchen des Flockgarnfadens 24 können toleranzbedingt größere Durchmesser des äußeren Schlauches 25 ausgeglichen werden, was bei Vorsehen nur der Flockgarnfäden 23 nicht möglich wäre.

Der Radius des zweiten Flockgarnfadens 24 ist mit R4 bezeichnet, während der Radius des ersten Flockgarnfadens 23 mit R1 bezeichnet ist. Dargestellt ist der Fall R4 größer R1. Der Aussendurchmesser der umwickelten biegsamen Welle beträgt im gezeigten Beispiel 2 mal R5, mit R5 als Radius der umwickelten biegsamen Welle.

Fig. 3 zeigt den Sonderfall, dass zwei Flockgarnfäden 23 mit einem ersten Durchmesser bei der Umwicklung vorgesehen werden, während nur ein Flockgarnfaden 24 mit einem zweiten größeren Durchmesser vorgesehen ist. Weiterhin zeigt Fig. 3 den Sonderfall, dass die äußere Drahtlage vollständig mit einem Flockgarnfaden abgedeckt wird. Bei einem wie in Fig. 1 dargestellten Steigungskabel könnte zum Beispiel ein Flockgarnfaden 23 zusammen mit einem Flockgarnfaden 24 zwischen den Windungen der Wendel 3 eingewickelt sein. Es ist auch möglich, auch dort zwei Flockgarnfäden 23 und einen Flockgarnfaden 24 einzuwickeln, wenn dies als vorteilhaft gesehen wird.

In nicht dargestellter Weise können die in den Fig. 1-3 gezeigten Flockgarnfäden gegen ein Ablösen dadurch gesichert werden, dass sie mit Klebemitteln befestigt werden oder dass durch gezielte Anwendung von Wärme ein Anschmelzen auf der äußeren Drahtlage erfolgt. Es ist auch möglich, die Flockgarnfäden 23 bzw. 24 in die Zwischenräume der äußeren Drahtlage durch besonders enge Umwicklung einzupressen.

Bei der Herstellung der erfindungsgemäßen biegsamen Welle 1 kann das Umwickeln mit einem Flockgarnfaden 23, 24 in einem Umwicklungsschritt oder in mehreren Umwicklungsschritten erfolgen. Es ist zum Beispiel möglich, den ersten und den zweiten Flockgarn 23 bzw. 24 zeitgleich und nebeneinanderliegend auf die äußere Drahtlage zu wickeln. Es ist auch möglich, in einem ersten Umwicklungsschritt zum Beispiel nur den Flockgarnfaden 23 zu wickeln, wobei dabei z.B. bevorzugt ein Zwischenraum belassen wird, in den dann in einem nachfolgenden Umwicklungsschritt der zweite Flockgarnfaden 24 eingewickelt wird. Es ist auch möglich, zunächst mit dem ersten Flockgarnfaden eine geschlossene Flockgarndecke zu wickeln und auf diese geschlossene Decke dann den zweiten Fockgarnfaden zu wickeln. Es ist auch möglich, dass zeitgleich mehrere erste Flockgarne 23 und mehrere zweite Flockgarne 24 um die äußere Drahtlage gewickelt werden, wobei diese mehreren ersten und zweiten Flockgarne 23, 24 auch gleichzeitig in einem gemeinsamen Umwicklungsschritt um die äußere Drahtlage herumgewickelt werden können.

Es ist weiterhin auch möglich, in der äußeren Drahtlage einen Zwischenraum zu belassen, in den dann erste und zweite Flockgarnfäden 23, 24 eingewickelt werden. Auch dies kann zeitlich nacheinander erfolgen oder bei der Wicklung der äußeren Drahtlage kann diese Wicklung in einem einzigen Umwicklungsschritt zeitgleich sowohl mit den Drähten der äußeren Drahtlage als auch mit den Flockgarnfäden 23 und 24 erfolgen.

Im dargestellten Ausführungsbeispiel der Fig. 3 ist der Außendurchmesser des Flockgarnfadens 24 um etwa 50% größer als der Außendurchmesser des Flockgarnfadens 23. Es sind auch davon abweichende Durchmesserunterschiede möglich.

In einer Variante der Figur 2 könnte z.B. unterhalb einiger der ersten Flockgarnfäden 23 ein Flachband gewickelt sein, z.B. unterhalb jedes 2., 3. oder 4. Flockgarnfadens 23, wodurch sich diese Flockgarnfäden radial weiter nach außen erstrecken würden unter Vergrößerung des Radius R2 der resultierenden biegsamen Welle 1. Auch dadurch ließe sich das erfindungsgemäße Konzept realisieren. In der Herstellung würde bevorzugt so vorgegangen werden, dass ein solches Flachband mit einem Steigungsabstand um die Rohwelle 2 gewickelt würde und anschließend eine Umwicklung mit dem Flockgarnfaden 23 erfolgt.

Die vorliegende Erfindung wurde anhand der Ausführungsbeispiele detailliert beschrieben, wobei die dargestellten Flockgarnfäden auch durch alternative Umwicklungsmittel ersetzt sein können, also zum Beispiel durch elastische Schläuche, wie sie im Stand der Technik bekannt sind. Es ist für den Fachmann erkennbar, dass die Erfindung nicht auf diese konkreten Ausführungsbeispiele beschränkt ist, sondern dass vielmehr Abwandlungen in der Weise möglich sind, dass einzelne Merkmale weggelassen oder andere Kombinationen der vorgestellten Einzelmerkmale verwirklicht sind, sofern der Schutzbereich der beigefügten Ansprüche nicht verlassen wird. Die vorliegende Offenbarung schließt auch Kombinationen der vorstehend detailliert beschriebenen Einzelmerkmale ein.

Die Figuren zeigen als Spezialfall für eine biegsame Welle ein Steigungskabel zur Beschreibung der Erfindung. Dieses Beispiel ist nicht limitierend zu verstehen und jede andere biegsame Welle hätte als Beispiel gewählt werden können. Insbesondere kann die biegsame Welle also auch als biegsame Rohwelle 2 ausgebildet sein ohne Steigungswendel 3.

## Patentansprüche

1. Biegsame Welle (1), die mehrlagig aus gewickelten Drahtlagen ausgebildet ist und die radial außen liegend mit einem geräuschmindernden Umwicklungsmittel (23) mit einem ersten radialen Außenabstand (R2) zur Längsachse (X) der biegsamen Welle (1) umwickelt ist, wobei dieser radiale Außenabstand so gewählt ist, dass das Umwicklungsmittel (23) radial nach außen über die gewickelten Drahtlagen vorsteht, **dadurch gekennzeichnet, dass** radial außen liegend ein zweites geräuschminderndes Umwicklungsmittel (24) mit einem zweiten radialen Außenabstand (R5) zur Längsachse (X) der biegsamen Welle (1) angeordnet ist, wobei der zweite radiale Außenabstand (R5) größer als der erste radiale Außenabstand (R2) ist.

2. Biegsame Welle (1) nach Anspruch 1, **gekennzeichnet durch** eine radial außen liegende und spiralförmig umlaufende Steigungswendel (3), wobei das geräuschmindernde erste Umwicklungsmittel (23) und das geräuschmindernde zweite Umwicklungsmittel (24) zwischen den Windungen der Steigungswendel (3) der als Steigungswelle ausgebildeten biegsamen Welle (1) angeordnet sind.

3. Biegsame Welle (1) nach Anspruch 1 oder 2, **dadurch gekennzeichnet, dass** das erste und das zweite geräuschmindernde Umwicklungsmittel als Flockfaden (23, 24) ausgebildet ist, insbesondere wobei der Radius (R1) des ersten Flockfadens (23) kleiner ist als der Radius (R4) des zweiten Flockfadens (24).

4. Biegsame Welle (1) nach einem der vorhergehenden Ansprüche, **dadurch gekennzeichnet, dass** die biegsame Welle (1) mit mehreren ersten geräuschmindernden Umwicklungsmitteln (23) umwickelt ist, wobei die Zahl der ersten geräuschmindernden Umwicklungsmittel insbesondere größer ist als die Zahl der zweiten geräuschmindernden Umwicklungsmittel (24).

5. Biegsame Welle (1) nach einem der vorhergehenden Ansprüche, **dadurch gekennzeichnet, dass** der Durchmesser des zweiten geräuschmindernden Umwicklungsmittels (24) um wenigstens 10 % größer ist als der Durchmesser des ersten geräuschmindernden Umwicklungsmittels (23), bevorzugt mindestens 20%, weiter bevorzugt mindestens 25 %.

6. Biegsame Welle (1) nach einem der vorhergehenden Ansprüche, **dadurch gekennzeichnet, dass** die Welle im Wesentlichen vollständig von geräuschmindernden Umwicklungsmitteln (23, 24) zur Ausbildung einer geschlossenen Flockgarndecke umwickelt ist, insbesondere mit Ausnahme endständiger Endbereiche der biegsamen Welle (1).

7. Kraftübertragungsanordnung bestehend aus einer biegsamen Welle (1), die drehbar in einem die biegsame Welle umgebenden Schutzelement (25) aufgenommen ist, **gekennzeichnet durch** eine biegsame Welle (1) nach einem der Ansprüche 1 bis 6.

8. Einstellbare Fahrzeugkomponente, umfassend einen Antrieb, ein anzutreibendes Element und ein dazwischen angeordnetes Kraftübertragungselement, welches **gekennzeichnet ist durch** die Merkmale des Anspruchs 7.

9. Verfahren zur Herstellung einer biegsamen, mehrlagig aus gewickelten Drahtlagen ausgebildeten Welle (1) mit einer geräuschmindernden Umwicklung (23), **dadurch gekennzeichnet, dass** das Verfahren die Schritte umfasst: Herstellung einer biegsamen, mehrlagig aus gewickelten Drahtlagen ausgebildeten Rohwelle (2) ohne geräuschmindernde Umwicklung, Umwickeln der Rohwelle (2) mit einem ersten geräuschmindernden Umwicklungsmittel (23) mit einem ersten radialen Außenabstand (R2) zur Längsachse (X) der biegsamen Welle (1), wobei der radiale Außenabstand (R2) so gewählt ist, dass das Umwicklungsmittel (23) radial nach außen über die gewickelten Drahtlagen vorsteht, Umwickeln der Rohwelle (2) mit einem zweiten geräuschmindernden Umwicklungsmittel (24) mit einem zweiten radialen Außenabstand (R5) zur Längsachse (X) der biegsamen Welle (1), wobei der zweite radiale Außenabstand (R5) größer als der erste radiale Außenabstand (R2) ist.

10. Verfahren nach Anspruch 9, **dadurch gekennzeichnet, dass** das Umwickeln mit dem ersten und mit dem zweiten Umwicklungsmittel (23, 24) im gleichen Umwicklungsschritt erfolgt.

## Claims

1. A flexible shaft (1) that is formed from several wound layers of wire and is wrapped with a noise-reducing wrapping means (23) disposed on the radial outside thereof and having a first radial outer distance (R2) from the longitudinal axis (X) of the flexible shaft (1), wherein
said radial outer distance is selected such that the wrapping means (23) protrudes radially outwards beyond the wound wire layers,
**characterised in that**
- a second noise-reducing wrapping means (24) having a second radial outer distance (R5) from the longitudinal axis (X) of the flexible shaft (1) is arranged on the radial outside thereof, wherein the second radial outer distance (R5) is in excess of the first radial outer distance (R2).

2. The flexible shaft (1) in accordance with Claim 1, **characterised by** a radially outer and helically circumferential pitch coil (3), wherein the noise-reducing first wrapping means (23) and the noise-reducing second wrapping means (24) are arranged between the windings of the pitch coil (3) of the flexible shaft (1) that is formed as a pitch shaft.

3. The flexible shaft (1) in accordance with Claim 1 or 2, **characterised in that** the first and the second noise-reducing wrapping means are formed as flock threads (23, 24), particularly wherein the radius (R1) of the first flock thread is smaller than the radius (R4) of the second flock thread (24).

4. The flexible shaft (1) in accordance with any one of the preceding claims, **characterised in that** the flexible shaft (1) is wrapped with a plurality of first noise-reducing wrapping means (23), wherein the number of the first noise-reducing wrapping means is, in particular, in excess of the number of the second noise-reducing wrapping means (24).

5. The flexible shaft (1) in accordance with any one of the preceding claims, **characterised in that** the diameter of the second noise-reducing wrapping means (24) is in excess of the diameter of the first noise-reducing wrapping means (23) by at least 10 per cent, preferably by at least 20 per cent, further preferably by at least 25 per cent.

6. The flexible shaft (1) in accordance with any one of the preceding claims, **characterised in that** the shaft is, in essence, completely wrapped with noise-reducing wrapping means (23, 24) to form a closed flock thread cover, particularly with the exception of terminal end regions of the flexible shaft (1).

7. A power transmission assembly, consisting of a flexible shaft (1), said power transmission assembly being rotatably accommodated in a protective element (25) surrounding the flexible shaft, **characterised by** a flexible shaft (1) in accordance with any one of Claims 1 to 6.

8. An adjustable vehicle component, comprising a drive, an element to be driven and a power transmission element arranged therebetween, the power transmission element being **characterised by** the features of Claim 7.

9. A method for the production of a flexible shaft (1) that is formed from several wound layers of wire with noise-reducing wrapping (23), **characterised in that** the method comprises the steps of:
producing a flexible raw shaft (2) that is formed from several wound layers of wire without noise-reducing wrapping; wrapping the raw shaft (2) with a first noise-reducing wrapping means (23) having a first radial outer distance (R2) from the longitudinal axis (X) of the flexible shaft (1), wherein the radial outer distance (R2) is selected such that the wrapping means (23) protrudes radially outwards beyond the wound wire layers; wrapping the raw shaft (2) with a second noise-reducing wrapping means (24) having a second radial outer distance (R5) from the longitudinal axis (X) of the flexible shaft (1), wherein the second radial outer distance (R5) is in excess of the first radial outer distance (R2).

10. The method in accordance with Claim 9, **characterised in that** the wrapping with the first and the second wrapping means (23, 24) is carried out in the same wrapping step.

## Revendications

1. Arbre flexible (1) formé de plusieurs couches de fil enroulé et enveloppé radialement d'un habillage réducteur de bruit (23) à une première distance radiale (R2) de l'axe longitudinal (X) de l'arbre flexible (1), cette distance radiale étant choisie de façon telle que l'habillage (23) dépasse radialement vers l'extérieur les enroulements de fil, **caractérisé en ce que** un second habillage réducteur de bruit (24) est agencé radialement à l'extérieur à une seconde distance radiale (R5) de l'axe longitudinal (X) de l'arbre flexible (1), cette seconde distance radiale (R5) étant supérieure à la première distance radiale (R2).

2. Arbre flexible (1) selon la revendication 1, **caractérisé par** une spirale d'entraînement (3) radiale périphérique, le premier habillage réducteur de bruit (23) et le second habillage réducteur de bruit (24) étant agencés entre les spires de la spirale d'entraînement (3) de l'arbre flexible (1) réalisé sous forme d'arbre d'entraînement.

3. Arbre flexible (1) selon la revendication 1 ou 2, **caractérisé en ce que** le premier et le second habillage réducteur de bruit sont réalisés sous forme de fils floqués (23, 24), le rayon (R1) du premier fil floqué (23) étant notamment inférieur au rayon (R4) du second fil floqué (24).

4. Arbre flexible (1) selon l'une des revendications précédentes, **caractérisé en ce que** l'arbre flexible (1) est enveloppé de plusieurs premiers habillages réducteurs de bruit (23), le nombre des premiers habillages réducteurs de bruit étant notamment supérieur au nombre des deuxièmes habillages réducteurs de bruit (24).

5. Arbre flexible (1) selon l'une des revendications précédentes, **caractérisé en ce que** le diamètre du deuxième habillage réducteur de bruit (24) est supérieur d'au moins 10 % au diamètre du premier habillage réducteur de bruit (23) et de préférence d'au moins 20 % ou de préférence d'au moins 25 %.

6. Arbre flexible (1) selon l'une des revendications précédentes, **caractérisé en ce que** l'arbre est essentiellement intégralement enveloppé d'habillages réducteurs de bruit (23, 24) formant une enveloppe de fil floqué fermée à l'exception notamment de sections d'extrémité terminales de l'arbre flexible (1).

7. Dispositif de transmission de force comprenant un arbre flexible (1) logé de façon à pouvoir tourner dans un élément de protection (25) entourant l'arbre, **caractérisé par** un arbre flexible (1) selon l'une des revendications 1 à 6.

8. Composant réglable pour automobile comprenant un entraînement, un élément à actionner et, agencé entre eux, un élément de transmission de force **caractérisé par** les caractéristiques de la revendication 7.

9. Procédé de fabrication d'un arbre flexible (1) comportant plusieurs couches de fil enroulé et doté d'un habillage réducteur de bruit (23), **caractérisé en ce que** le procédé comporte les étapes suivantes :
fabrication d'un arbre flexible (2) nu formé par plusieurs couches de fil enroulé et non doté d'un habillage réducteur de bruit,
enveloppement de l'arbre nu (2) avec un premier habillage réducteur de bruit (23) à une première distance radiale (R2) de l'axe longitudinal (X) de l'arbre flexible (1), cette distance radiale (R2) étant choisie de façon telle que l'habillage (23) dépasse radialement vers l'extérieur les enroulements de fil,
enveloppement de l'arbre nu (2) avec un second habillage réducteur de bruit (24) à une seconde distance radiale (R5) de l'axe longitudinal (X) de l'arbre flexible (1), cette seconde distance radiale (R5) étant supérieure à la première distance radiale (R2).

10. Procédé selon la revendication 9, **caractérisé en ce que** l'enveloppement avec le premier et le second habillage (23, 24) a lieu lors d'une seule et même étape d'enveloppement.
